# EUROPÄISCHE PATENTSCHRIFT

(11) **EP 1 210 892 B1**
(45) Veröffentlichungstag und Bekanntmachung des Hinweises auf die Patenterteilung: **23.07.2003**
(21) Anmeldenummer: 01125220.2
(22) Anmeldetag: 24.10.2001
(51) Int. Cl.: A47J 31/08

(54) **Aus einem Filterpapier hergestellter tütenartiger Filtereinsatz**
Paper filter inlay
Elément filtrant en papier-filtre

(30) Priorität: 02.12.2000 DE 10059971
(43) Veröffentlichungstag der Anmeldung: 05.06.2002
(73) Patentinhaber: MELITTA HAUSHALTSPRODUKTE GmbH & Co. Kommanditgesellschaft, D-32427 Minden (DE)
(72) Erfinder: Dölfel, Rainer Dr., 32457 Porta Westfalica (DE); Frank, Stephan, 59519 Möhnesee (DE); Jones, Frank Ronald, 32457 Porta Westfalica (DE)
(74) Vertreter: Dantz, Jan Henning

(56) Entgegenhaltungen:
- EP-A- 0 993 799
- BE-A- 661 814
- DE-A- 19 516 800
- DE-U- 20 105 974
- FR-A- 2 438 993

## Beschreibung

Die vorliegende Erfindung betrifft einen aus einem Filterpapier hergestellten, tütenartigen Filtereinsatz für die Herstellung von Aromaauszügen aus Kaffee oder Tee, wobei die Durchlässigkeit des Filtereinsatzes im Bodenbereich geringer ist als in seinem oberen Randbereich.

Ein Filtereinsatz der gattungsgemäßen Art ist aus der BE-A-661 814 bekannt. Bei dem vorbekannten Filtereinsatz ist im Bodenbereich eine Zone des Filterpapieres durch Komprimierung verdichtet und somit weniger durchlässig als in ihrem oberen Bereich.

Es sind auch Filtereinsätze mit gleichbleibender Durchlässigkeit bekannt. Sowohl Filtereinsätze der gattungsgemäßen Art wie auch solche, die eine gleichmäßige Durchlässigkeit aufweisen, werden überwiegend zum maschinellen Aufbrühen von Kaffee oder auch Tee benutzt. Dabei sind die entsprechenden Kaffee- oder Teemaschinen mit einem Filtergefäß ausgestattet, in welches ein Filtereinsatz eingesetzt und mit Kaffeemehl oder Tee gefüllt wird. Nach Einschalten der Kaffee- oder Teemaschine wird dann eine vorbestimmte Menge von Wasser mittels eines Durchlauferhitzers erhitzt und in den Filtereinsatz eingelassen. Das fertige Filtrat fließt dann in einen unterhalb des Filtergefäßes bereitgestellten Aufnahmebehälter.

In der Regel ist die Kapazität einer Kaffee- oder Teemaschine größer als das Fassungsvermögen des Filtergefäßes bzw. des Filtereinsatzes innerhalb des Filtergefäßes. Dies bedeutet, daß bei voller Ausnutzung der Kapazität einer Kaffee- oder Teemaschine während eines Brühvorganges eine im Vergleich zum Fassungsvermögen des Filtergefäßes und des darin befindlichen Filtereinsatzes erheblich größere Menge an Wasser durch das Filtergefäß mit dem einliegenden Filtereinsatz hindurchlaufen muß.

Aus den vorstehend genannten Gründen heraus werden Filtereinsätze auch der gattungsgemäßen Art so ausgelegt, daß ein Überlaufen des in den Filtereinsatz eingelassenen Brühwassers über dessen oberen Rand hin vermieden ist. Dies geschieht durch die Wahl eines Filterpapieres für die Herstellung eines Filtereinsatzes, dessen Filtrationsgeschwindigkeit so ausgelegt ist, daß ein Ansteigen des Brühwasserspiegels im Filtergefäß über dessen obere Randkanten hinaus sicher vermieden wird.

Da die Durchlaufgeschwindigkeit des Brühwassers durch die Filtereinrichtung, bestehend aus Filtergefäß und Filtereinsatz, auch abhängig ist von der Kaffeesorte sowie vom Mahlgrad des verwendeten Kaffees, werden für die Herstellung von Filtereinsätzen der gattungsgemäßen Art Filterpapiere mit relativ geringen Filtrationszeiten verwendet.

Im Ergebnis führen die geschilderten Abhängigkeiten dazu, daß die Kontaktzeit zwischen dem Brühwasser und dem Aromaträger relativ kurz ist, so daß ein im allgemeinen Sprachgebrauch als "stark" bezeichneter Kaffee den Einsatz einer größeren Menge an gemahlenem Kaffee erforderlich macht.

Der vorliegenden Erfindung liegt die Aufgabe zugrunde, einen Filtereinsatz der gattungsgemäßen Art zu schaffen, mit dem unter Einsatz einer vorgegebenen Menge eines Aromaträgers und einer vorgegebenen Menge an Brühwasser ein Brühgetränk höherer Trinkstärke erreichbar ist, als dies bislang möglich war, wobei gleichzeitig ein Überlaufen des Brühwassers über den oberen Rand des Filtereinsatzes hinaus ausgeschlossen sein soll.

Diese Aufgabe wird erfindungsgemäß dadurch gelöst, daß der Filtereinsatz aus einem Filterpapier mit einer nach der Herzberg-Methode ermittelten Filtrationszeit von mehr als 45 Sekunden hergestellt ist und im oberen Randbereich mit einer Perforationszone versehen ist.

Grundsätzlich liegt der vorliegenden Erfindung insoweit der Gedanke zugrunde, einen gattungsgemäßen Filtereinsatz mit Bereichen unterschiedlicher Durchlässigkeit und infolgedessen unterschiedlicher Filtrationszeit auszustatten, so daß zwar grundsätzlich eine längere Verweil- und Kontaktdauer des Brühwassers mit einem Aromaträger gewährleistet ist, gleichzeitig aber auch ein Überlaufen des Brühwassers über den oberen Rand des Filtereinsatzes hinaus verhindert wird dadurch, daß die Durchlässigkeit des Filtereinsatzes in seinem oberen Randbereich durch die Perforationszone verbessert ist.

Bei einem derartigen Filtereinsatz wird durch die verlängerte Kontaktdauer eine höhere Ausnutzung des Aromaträgers erreicht, so daß bei ansonsten gleichen Voraussetzungen - Menge des verwendeten Aromaträgers einerseits und Menge des verwendeten Brühwassers andererseits - ein Brühgetränk höherer Trinkstärke erreicht wird.

Dabei ist die Überlaufgefahr, wie oben schon geschildert, dadurch verhindert, daß die Durchlässigkeit des Filtereinsatzes im oberen Randbereich durch die Perforationszone so weit verbessert ist, daß dort das Brühwasser schneller abfließen kann als im unteren Bereich des Filtereinsatzes. Da auch das im oberen Bereich des Filtereinsatzes schneller abfließende Brühwasser immer noch mit dem Aromaträger kontaktiert wird, ist die durch den schnelleren Abfluß des Brühwassers im oberen Randbereich des Filtereinsatzes gegebene geringere Auslaugung des Aromaträgers letztendlich von untergeordneter Bedeutung für die erzielte Gesamt-Trinkstärke.

Weitere Merkmale der Erfindung sind Gegenstand von Unteransprüchen.

In den beigefügten Zeichnungen sind Ausführungsbeispiele der Erfindung dargestellt, die im folgenden näher beschrieben werden.

Es zeigen:
- Figur 1: eine Draufsicht auf einen flach liegenden, tütenartigen Filtereinsatz gemäß vorliegender Erfindung,
- Figur 2: eine der Figur 1 entsprechende Draufsicht auf einen Filtereinsatz nach einem weiteren Ausführungsbeispiel der Erfindung.

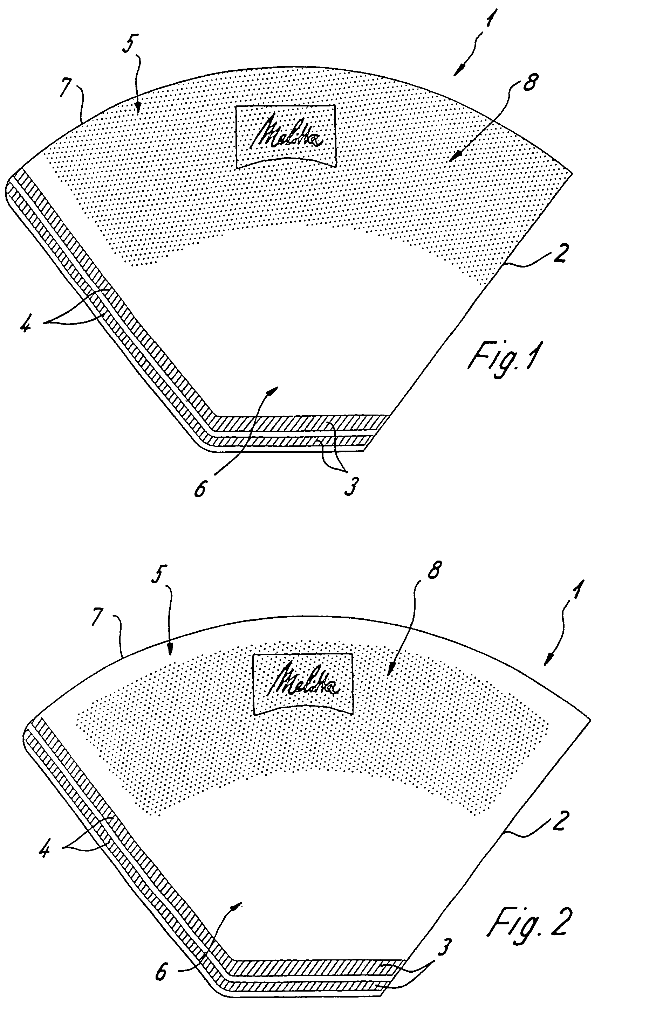

In den Figuren 1 und 2 ist jeweils mit dem Bezugszeichen 1 ein Filtereinsatz bezeichnet, der in an sich bekannter Weise aus einem Filterpapier hergestellt und tütenartig ausgebildet ist.

Jeder Filtereinsatz 1 weist eine Faltkante 2, eine Bodennaht 3, eine Seitennaht 4 und einen oberen Randbereich 5 auf.

Jeder der gezeigten Filtereinsätze 1 ist so gestaltet, daß seine Durchlässigkeit im Bodenbereich 6 geringer ist als in seinem oberen Randbereich 5.

Mit anderen Worten wird in einen erfindungsgemäßen Filtereinsatz 1 einlaufendes Brühwasser im Bodenbereich 6 des jeweiligen Filtereinsatzes 1 länger zurückgehalten als im oberen Randbereich 5.

Hierdurch kann ein Aromaauszug von hoher Trinkstärke erreicht werden, ohne daß die Gefahr des Überlaufens des Brühwassers über die Oberkante 7 hinaus besteht.

Insbesondere fertigungstechnisch ist es besonders einfach, unterschiedliche Durchlaufgeschwindigkeiten und damit Bereiche unterschiedlicher Filtrationszeiten dadurch zu schaffen, daß der Filtereinsatz 1 in seinem oberen Randbereich 5 mit einer Perforationszone 8 versehen ist.

Es kann deshalb ein Filterpapier verwendet werden, welches mit einer nach der Herzberg-Methode ermittelten Filtrationszeit von mehr als 45 Sekunden ausgestattet ist.

Bei der angesprochenen Herzberg-Methode zur Messung der Filtriergeschwindigkeit und der Naßfestigkeit von Filterpapieren wird ein Filterpapier-Prüfling mit einer Prüffläche von 10 cm² in einem Prüfzylinder eingespannt und dort mit einem unter einem vorbestimmten Druck stehenden Wasser beaufschlagt. Dabei wird ein Prüfdruck zum Prüfen der Filtriergeschwindigkeit von 50 mm Wassersäule eingestellt und die Prüfung bei einer Wassertemperatur von 20° C ± 1° C durchgeführt. Das Wasser muß dabei eine Wasserhärte von 2-10° dH aufweisen.

Das unter den vorstehend genannten äußeren Prüfbedingungen durch das Filterpapier hindurchfließende Wasser fließt über eine Ablaufrinne in einen Meßzylinder mit einer Skalenteilung = ≤ 2 ml. Die Filtrierzeit wird mit einer Stoppuhr gemessen, deren Skalenteilung = ≤ 0,2 Sekunden beträgt.

Aufgrund der vorstehend genannten Prüfbedingungen kann neben der Filtrierzeit, die über eine Stoppuhr ermittelt wird, auch die Filtriergeschwindigkeit ermittelt werden, die sich als Quozient aus der Filtrierzeit und dem im Meßzylinder aufgefangenen Filtriervolumen errechnet.

Der durch die Perforationen innerhalb der Perforationszone 8 gebildete freie Durchtrittsquerschnitt kann vorteilhafterweise zum oberen Rand 7 des Filtereinsatzes 1 hin ansteigen.

Wir Figur 1 zeigt, kann sich die Perforationszone 8 über den gesamten oberen Randbereich des Filtereinsatzes 1 erstrecken.

Figur 2 zeigt beispielhaft, daß die Perforationszone 8 auch gegenüber dem oberen Rand 7 sowie gegenüber den Seitenkanten (Faltkante 2 und Seitennaht 4) geringfügig zurückspringen kann, wodurch die mechanische Stabilität des Filtereinsatzes im oberen Randbereich 5 weitgehend erhalten bleibt.

Die höhere Durchlässigkeit des Filtereinsatzes 1 in seinem oberen Randbereich 5 kann über die dargestellten Ausführungsbeispiele hinausgehend auch durch eine Prägeperforationszone gebildet werden, wobei durch eine entsprechende Prägung eine Papierdeformation bis zur Lochbildung herbeigeführt wird.

Eine derartige Prägeperforation kann mit Hilfe eines Walzenpaares erfolgen, wodurch die Deformation und gegebenenfalls auch Lochbildung im Filterpapier und damit auch dessen Durchlässigkeit besonders genau eingestellt werden kann.

Die Perforationszone 8 oder eine entsprechende Prägeperforationszone im oberen Randbereich kann in unterschiedlichen geometrischen Formen und Größen erzeugt werden, wesentlich ist lediglich, daß insgesamt eine ausreichende Durchlässigkeit zur Verhinderung des Überlaufens erzielt wird.

## Patentansprüche

1. Aus einem Filterpapier hergestellter, tütenartiger Filtereinsatz (1) für die Herstellung von Aromaauszügen aus Kaffee oder Tee, wobei die Durchlässigkeit des Filtereinsatzes (1) im Bodenbereich (6) geringer ist als in seinem oberen Randbereich (5), **dadurch gekennzeichnet, daß** der Filtereinsatz (1) aus einem Filterpapier mit einer nach der Herzberg-Methode ermittelten Filtrationszeit von mehr als 45 Sekunden hergestellt ist und im oberen Randbereich (5) mit einer Perforationszone (8) versehen ist.

2. Filtereinsatz nach Anspruch 1, **dadurch gekennzeichnet, daß** der durch die Perforationen innerhalb der Perforationszone (8) gebildete freie Durchtrittsquerschnitt zum oberen Rand (7) des Filtereinsatzes (1) hin ansteigt.

3. Filtereinsatz nach Anspruch 1 oder 2, **dadurch gekennzeichnet, daß** die Perforationszone (8) gegenüber der oberen Randkante (7) und/oder gegenüber den Seitenkanten (2, 4) geringfügig zurückspringt.

4. Filtereinsatz nach Anspruch 1, **dadurch gekennzeichnet, dass** die Perforationszone (8) eine Prägeperforationszone ist.

## Claims

1. Bag-like filter insert (1) which is produced from a filter paper and is intended for producing aroma extracts of coffee or tea, the filter insert (1) being less permeable in the base region (6) than in its top peripheral region (5), **characterized in that** the filter insert (1) is produced from a filter paper with a filtration time, determined by the Herzberg method, of more than 45 seconds, and is provided with a perforation zone (8) in the top peripheral region (5).

2. Filter insert according to Claim 1, **characterized in that** the free through-passage cross section which is formed by the perforations within the perforation zone (8) increases in the direction of the top periphery (7) of the filter insert (1).

3. Filter insert according to Claim 1 or 2, **characterized in that** the perforation zone (8) is set back slightly in relation to the top peripheral edge (7) and/or in relation to the side edges (2, 4).

4. Filter insert according to Claim 1, **characterized in that** the perforation zone (8) is an embossed perforation zone.

## Revendications

1. Filtre (1) du type cornet, fabriqué à partir de papier filtre, destiné à l'obtention d'extraits aromatiques de café ou de thé, la porosité du filtre (1) étant plus faible, dans la zone du fond (6), que dans la zone de son bord supérieur (5), **caractérisé en ce que** le filtre (1) est fabriqué à partir de papier filtre dont la vitesse de filtration, calculée selon la méthode de Herzberg, est supérieure à 45 secondes, et le filtre présente, dans la zone de son bord supérieur (5), une zone de perforations (8).

2. Filtre selon la revendication 1, **caractérisé en ce que** la section transversale de passage libre qui est donnée par les perforations présentes à l'intérieur de la zone de perforations (8) augmente en direction du bord supérieur (7) du filtre (1).

3. Filtre selon la revendication 1 ou 2, **caractérisé en ce que** la zone de perforations (8) est légèrement en retrait par rapport à l'arête du bord supérieur (7) et/ou par rapport aux arêtes latérales (2, 4).

4. Filtre selon la revendication 1, **caractérisé en ce que** la zone de perforations (8) est une zone de perforations par estampage.
